# EUROPEAN PATENT SPECIFICATION

(11) **EP 4 268 537 B1**
(45) Date of publication and mention of the grant of the patent: **03.12.2025**
(21) Application number: 21960949.2
(22) Date of filing: 21.10.2021
(51) Int. Cl.: H04W 40/22, H04W 76/14, H04W 28/02, H04W 40/24, H04W 76/11, H04W 88/04, H04W 88/08, H04W 92/10, H04W 92/12, H04W 92/18

(54) **METHOD, DEVICE, AND SYSTEM FOR RELAY CONFIGURATION IN WIRELESS NETWORKS**
VERFAHREN, VORRICHTUNG UND SYSTEM ZUR RELAISKONFIGURATION IN DRAHTLOSEN NETZWERKEN
PROCÉDÉ, DISPOSITIF ET SYSTÈME DE CONFIGURATION DE RELAIS DANS DES RÉSEAUX SANS FIL

(43) Date of publication of application: 01.11.2023
(73) Proprietor: ZTE Corporation, Shenzhen, Guangdong 518057 (CN)
(72) Inventor: CHEN, Lin, Shenzhen, Guangdong 518057 (CN); WANG, Mengzhen, Shenzhen, Guangdong 518057 (CN); DU, Weiqiang, Shenzhen, Guangdong 518057 (CN); LUO, Wei, Shenzhen, Guangdong 518057 (CN)
(74) Representative: Vossius & Partner Patentanwälte Rechtsanwälte mbB
(86) International application number: PCT/CN2021/125174
(87) International publication number: WO 2023/065198

(56) References cited:
- WO-A1-2021/138575
- CN-A- 110 326 321
- CN-A- 110 999 384
- CN-A- 111 526 559
- ZTE ET AL: "Discussion on SL relay protocol architecture", vol. RAN WG2, no. electronic; 20210412 - 20210420, 2 April 2021 (2021-04-02), XP052174539, Retrieved from the Internet <URL:https://ftp.3gpp.org/tsg_ran/WG2_RL2/TSGR2_113bis-e/Docs/R2-2102976.zip R2-2102976 Discussion on SL relay protocol architecture.doc> [retrieved on 20210402]
- ZTE CORPORATION ET AL: "Discussion on adaptation layer design", vol. RAN WG2, no. Online; 20210816 - 20210827, 6 August 2021 (2021-08-06), XP052034651, Retrieved from the Internet <URL:https://ftp.3gpp.org/tsg_ran/WG2_RL2/TSGR2_115-e/Docs/R2-2108148.zip R2-2108148 Discussion on adaptation layer design.doc> [retrieved on 20210806]

## Description

### TECHNICAL FIELD

This disclosure is directed generally to wireless communications, and particularly to a method, device, and system for sidelink communication.

### BACKGROUND

With the development of wireless multimedia services, demands of high data rate services significantly increase. Under such a condition, requirements of system capacity and coverage of a wireless communication network become higher. On the other hand, to support application scenarios such as public safety, social network, short distance data sharing, local advertisement, etc., demands of proximity services which allow one device to communicate with another adj acent device also increase. As a result, device-to-device (D2D) communication technology is proposed to serve such demands. By adopting the D2D technology, burden of the wireless communication network may be decreased, power consumption of user equipment may be reduced, and data rate may be increased and robustness of network infrastructures may be improved. The D2D technology may also be referred to as proximity service (ProSe) or sidelink communications.

WO 2021/138575, 3GPP Draft R2-2102976 and 3GPP Draft R2-2108148 are related prior art documents.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional. This disclosure is directed to a method, device, and system for sidelink communication in a wireless communication network.

In some embodiments, a method performed by a Distributed Unit (DU) of a wireless communication node in a wireless network is disclosed. The method may include transmitting a first transferring message to a Central Unit (CU) of the wireless communication node, wherein the first transferring message further comprises at least one of the following fields: a CU level remote UE identifier (ID) identifying a remote UE in the CU;
a DU level remote UE ID identifying the remote UE in the DU; an ID of the remote UE; or a Cell Radio Network Temporary Identifier (C-RNTI) of the remote UE.

In some embodiments, a method performed by a Central Unit (CU) of a wireless communication node in a wireless network is disclosed. The method may include transmitting a first F1 Application Protocol (F1AP) signaling to a DU of the wireless communication node to configure a UE context for a relay UE; or transmitting a second F1AP signaling to the DU to configure a UE context for a remote UE, wherein the remote UE is configured with an indirect path using the relay UE to the wireless communication node.

In some embodiments, a method performed by a CU of a wireless communication node in a wireless network is disclosed. The method may include sending an ID of a remote UE to the remote UE, wherein the ID of the remote UE is used for relaying traffic between the remote UE and the wireless communication node via a relay UE.

In some embodiments, a method performed by a CU of a wireless communication node in a wireless network is disclosed. The method may include transmitting a first message to a DU of the wireless communication node to configure a Uu RLC channel between the DU and a relay UE; or transmitting a second message to the DU to configure a relay UE side configuration of a PC5 RLC channel between the relay UE and a remote UE, wherein the Uu RLC channel and the PC5 RLC channel are used to deliver traffic destined to the remote UE, and wherein the relay UE serves as a relay between the remote UE and the wireless communication node.

In some embodiments, a method performed by a CU of a first wireless communication node in a wireless network is disclosed. The method may include transmitting a first message to a DU of the first wireless communication node, the first message comprising sidelink communication authorization information for at least one of: a relay UE, or a remote UE.

In some embodiments, a method performed by a wireless device in a wireless network is disclosed. The method may include receiving an ID of the wireless device from a CU of a wireless communication node in the wireless network, wherein: the ID of the wireless device is used for relaying traffic between the wireless device and the wireless communication node via a relay UE.

In some embodiments, there is a network element or wireless device comprising a processor and a memory, wherein the processor is configured to read code from the memory and implement any methods recited in any of the embodiments.

In some embodiments, a computer program product comprising a computer-readable program medium code stored thereupon, the code, when executed by a processor, causing the processor to implement any method recited in any of the embodiments.

The above embodiments and other aspects and alternatives of their implementations are described in greater detail in the drawings, the descriptions, and the claims below.

### BRIEF DESCRIPTION OF THE DRAWINGS

FIG. 1 shows an example wireless communication network.
FIG. 2 shows an example wireless network node.
FIG. 3 shows an example user equipment.
FIG. 4 shows an exemplary data path for sidelink communication.
FIG. 5 shows an example protocol stacks with adaptation layer in a wireless communication network.
FIG. 6 shows an example procedure for allocating local ID for a remote UE.
FIG. 7 shows another example procedure for allocating local ID for a remote UE.
FIG. 8 shows an example procure with respect to sidelink communication initiation.
FIG. 9 shows another example procure with respect to sidelink communication initiation.
FIG. 10 shows an example message flow for a sidelink communication procedure.

### DETAILED DESCRIPTION

### Wireless Communication Network

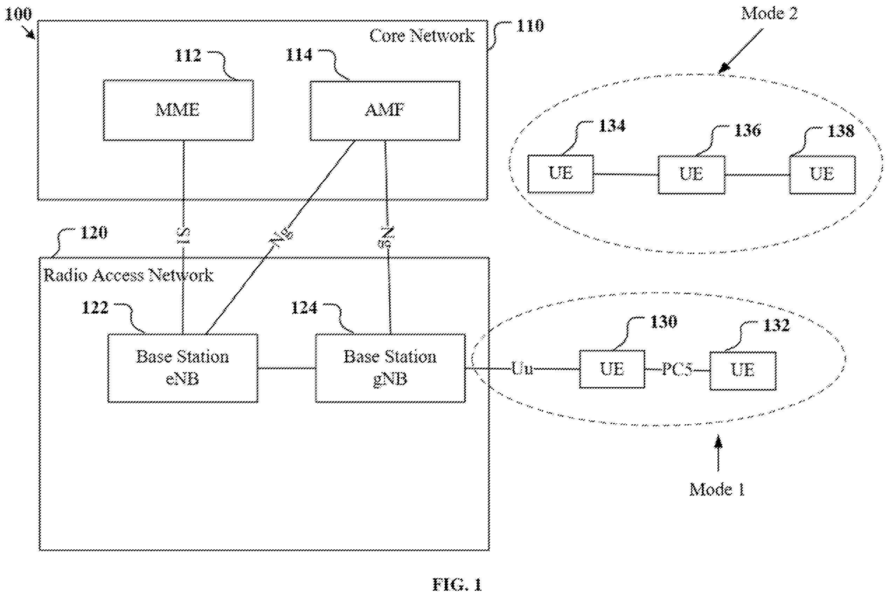

FIG. 1 shows an exemplary wireless communication network 100 that includes a core network 110 and a radio access network (RAN) 120. The core network 110 further includes at least one Mobility Management Entity (MME) 112 and/or at least one Access and Mobility Management Function (AMF). Other functions that may be included in the core network 110 are not shown in FIG. 1. The RAN 120 further includes multiple base stations, for example, base stations 122 and 124. The base stations may include at least one evolved NodeB (eNB) for 4G LTE, or a Next generation NodeB (gNB) for 5G New Radio (NR), or any other type of signal transmitting/receiving device such as a UMTS NodeB. The eNB 122 may communicate with the MME 112 via an S1 interface. Both the eNB 122 and gNB 124 may connect to the AMF 114 via an Ng interface. Each base station manages and supports at least one cell. For example, the base station gNB 124 may be configured to manage and support cell 1, cell 2, and cell 3.

The gNB 124 may include a central unit (CU) and at least one distributed unit (DU). The CU and the at least one DU may be co-located, or they may be split in different locations. The CU and the DU may be connected via an F1 interface. Alternatively, for an eNB which is capable of connecting to the 5G network, it may also be similarly divided into a CU and at least one DU, referred to as ng-eNB-CU and ng-eNB-DU, respectively. The ng-eNB-CU and the at least one ng-eNB-DU may be connected via a W1 interface.

The wireless communication network 100 may include multiple UEs, for example, UE 130 and UE 132. A UE may be connected to a base station via a Uu interface. For example, as shown in FIG. 1, UE 130 is connected to gNB 124 via the Uu interface. Additionally, sidelink communication may be supported in which UE 132 may connect to the base station indirectly by using UE 130 as a relay. In a sidelink communication setting, UE 132 may be referred to as a remote UE and UE 130 may be referred to as a relay UE. The remote UE and the relay UE may be connected via a PC5 interface, as shown in FIG. 1.

The wireless communication network 100 may be implemented as, for example, a 2G, 3G, 4G/LTE, or 5G cellular communication network. Correspondingly, the base stations 122 and 124 may be implemented as a 2G base station, a 3G NodeB, an LTE eNB, or a 5G NR gNB. The UE 160 may be implemented as mobile or fixed communication devices which are capable of accessing the wireless communication network 100. The UE 160 may include but is not limited to mobile phones, laptop computers, tablets, personal digital assistants, wearable devices, Internet of Things (IoT) devices, MTC/eMTC devices, distributed remote sensor devices, roadside assistant equipment, XR devices, and desktop computers. The UE 160 may support sidelink communication to another UE via a PC5 interface.

While the description below focuses on cellular wireless communication systems as shown in FIG. 1, the underlying principles are applicable to other types of wireless communication systems for paging wireless devices. These other wireless systems may include but are not limited to Wi-Fi, Bluetooth, ZigBee, and WiMax networks.

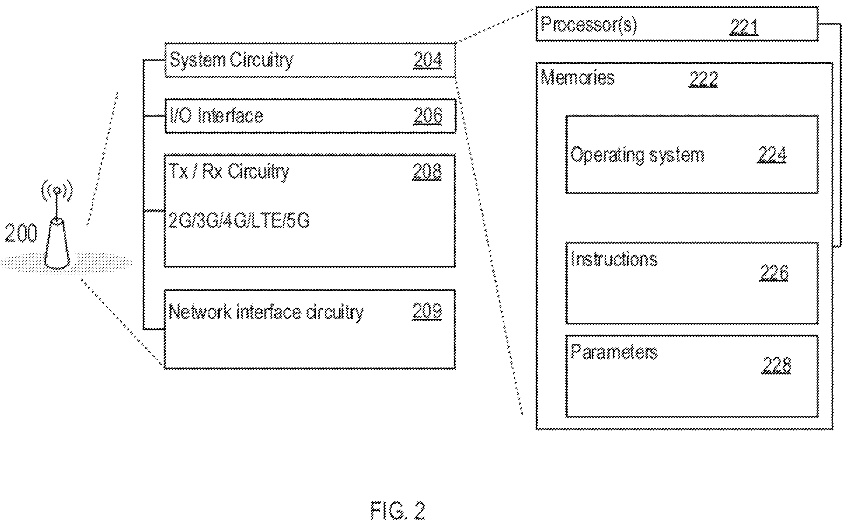

FIG. 2 shows an example of electronic device 200 to implement a network base station (e.g., a radio access network node), a core network (CN), and/or an operation and maintenance (OAM). In one implementation, the example electronic device 200 may include radio transmitting/receiving (Tx/Rx) circuitry 208 for transmitting/receiving communication information with UEs and/or other base stations. The electronic device 200 may also include network interface circuitry 209 for communication with other base stations and/or a core network. The network interface circuitry may be based on optical or wireline interconnects, Ethernet, and/or other data transmission mediums/protocols. The electronic device 200 may include an input/output (I/O) interface 206 to communicate with an operator or the like.

The electronic device 200 may also include system circuitry 204. System circuitry 204 may include processor(s) 221 and/or memory 222. Memory 222 may include an operating system 224, instructions 226, and parameters 228. Instructions 226 may be configured for execution by the one or more of the processors 221 to perform the functions of a network node. The parameters 228 may include parameters to support execution of the instructions 226. For example, the parameters may include network protocol settings, bandwidth parameters, radio frequency mapping assignments, and/or other parameters.

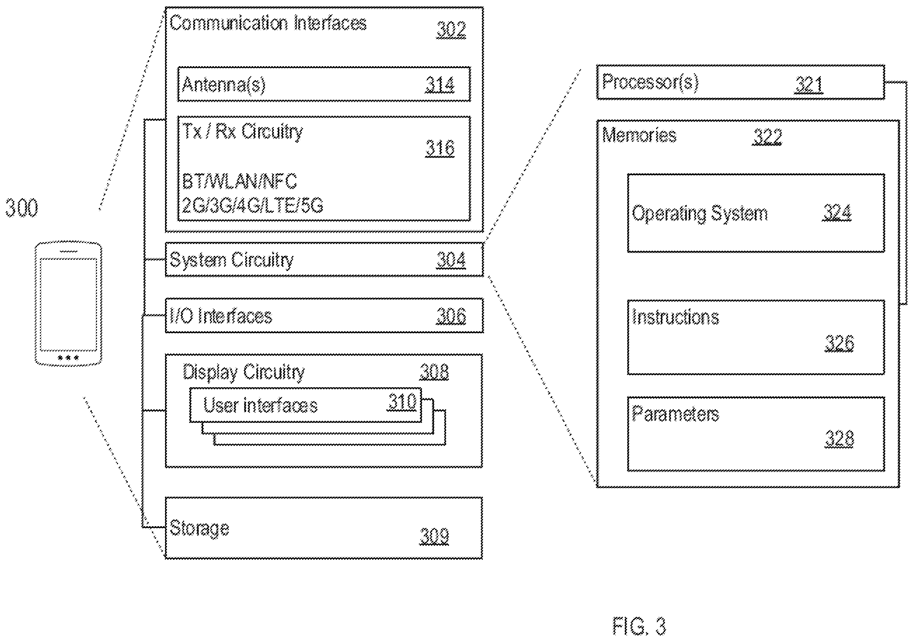

FIG. 3 shows an example of an electronic device to implement a terminal device 300 (for example, a user equipment (UE)). The UE 300 may be a mobile device, for example, a smart phone or a wireless communication module disposed in any other device. The UE 300 may include a portion or all of the following: communication interfaces 302, a system circuitry 304, an input/output interfaces (I/O) 306, a display circuitry 308, and a storage 309. The display circuitry may include a user interface 310. The system circuitry 304 may include any combination of hardware, software, firmware, or other logic/circuitry. The system circuitry 304 may be implemented, for example, with one or more systems on a chip (SoC), application specific integrated circuits (ASIC), discrete analog and digital circuits, and other circuitry. The system circuitry 304 may be part of the implementation of any desired functionality in the UE 300. In that regard, the system circuitry 304 may include logic that facilitates, as examples, decoding and playing music and video, e.g., MP3, MP4, MPEG, AVI, FLAC, AC3, or WAV decoding and playback; running applications; accepting user inputs; saving and retrieving application data; establishing, maintaining, and terminating cellular phone calls or data connections for, as one example, internet connectivity; establishing, maintaining, and terminating wireless network connections, Bluetooth connections, or other connections; and displaying relevant information on the user interface 310. The user interface 310 and the inputs/output (I/O) interfaces 306 may include a graphical user interface, touch sensitive display, haptic feedback or other haptic output, voice or facial recognition inputs, buttons, switches, speakers and other user interface elements. Additional examples of the I/O interfaces 306 may include microphones, video and still image cameras, temperature sensors, vibration sensors, rotation and orientation sensors, headset and microphone input / output jacks, Universal Serial Bus (USB) connectors, memory card slots, radiation sensors (e.g., IR sensors), and other types of inputs.

Referring to FIG. 3, the communication interfaces 302 may include a Radio Frequency (RF) transmit (Tx) and receive (Rx) circuitry 316 which handles transmission and reception of signals through one or more antennas 314. The communication interface 302 may include one or more transceivers. The transceivers may be wireless transceivers that include modulation / demodulation circuitry, digital to analog converters (DACs), shaping tables, analog to digital converters (ADCs), filters, waveform shapers, filters, pre-amplifiers, power amplifiers and/or other logic for transmitting and receiving through one or more antennas, or (for some devices) through a physical (e.g., wireline) medium. The transmitted and received signals may adhere to any of a diverse array of formats, protocols, modulations (e.g., QPSK, 16-QAM, 64-QAM, or 256-QAM), frequency channels, bit rates, and encodings. As one specific example, the communication interfaces 302 may include transceivers that support transmission and reception under the 2G, 3G, BT, WiFi, Universal Mobile Telecommunications System (UMTS), High Speed Packet Access (HSPA)+, 4G / Long Term Evolution (LTE), and 5G standards. The techniques described below, however, are applicable to other wireless communications technologies whether arising from the 3rd Generation Partnership Project (3GPP), GSM Association, 3GPP2, IEEE, or other partnerships or standards bodies.

Referring to FIG. 3, the system circuitry 304 may include one or more processors 321 and memories 322. The memory 322 stores, for example, an operating system 324, instructions 326, and parameters 328. The processor 321 may be configured to execute the instructions 326 to carry out desired functionality for the UE 300. The parameters 328 may provide and specify configuration and operating options for the instructions 326. The memory 322 may also store any BT, WiFi, 3G, 4G, 5G or other data that the UE 300 will send, or has received, through the communication interfaces 302. In various implementations, a system power for the UE 300 may be supplied by a power storage device, such as a battery or a transformer.

### Sidelink Communication

The sidelink communication aims to extend the coverage and improve power consumption of the wireless communication network. The sidelink based relay communication may be applied to applications such as indoor relay communication, smart farming, smart factory and public safety services. FIG. 1 shows two modes for applying the sidelink based relay communication.

### Mode 1: UE-to-Network Relay

In mode 1, UE 132 may be in an area with poor coverage condition or no coverage at all. UE 132 is allowed to communicate with the network (e.g. gNB 124) via a nearby UE 130 covered by the network. As a result, the coverage of the network is extended and the capacity of the network is increased. Note that in this scenario the UE 130 may be referred to as a UE-to-Network relay UE (or relay UE for simplicity) and the UE 132 may be referred to as a remote UE.

### Mode 2: UE-to-UE Relay

During emergency situations (e.g., earthquake), the wireless communication network may operate abnormally or a sidelink communication range of the network needs to be extended. Thus, the relay communications are designed for allowing the UEs having communication with each other via a relay UE. As shown in FIG. 1, UE 134 may communicate with UE 138 via UE 136 (or multiple relay UEs, not shown in FIG. 1), wherein UE 136 is referred to as a UE-to-UE relay UE in mode 2.

### Relay Scheme

To support the UE traffic relay, two schemes may be implemented using different layer for the relay. One scheme may be layer 3 ((e.g., internet protocol (IP) layer) based, and another scheme may be layer 2 (e.g., access layer) based. The layer 3 based relay forwards data according to IP layer information (e.g. IP address and/or IP port number) of the UE, whereas the layer 2 based relay routes and forwards data of user plane (UP) and control plane (CP) in access layer. The layer 2 relay may allow network elements (e.g., core network and/or the base station) to manage the remote UE and the relay more effectively.

### CU and DU Split Architecture

As described above, gNB 124 may include one CU and multiple DUs and the RAN functionality of the gNB is distributed to the CU and DUs. For example, RAN functions may be split at the point between the Packet Data Convergence Protocol (PDCP) layer and the Radio Link Control (RLC) layer of the 5G protocol stack, where the DUs will handle all processes up to and including the RLC layer functions and the CU will handle PDCP layer and higher layer functions prior to the core network. Through the isolation of the stack from the PDCP layer and upwards, the CU will be able to act as a Cloud-based convergence point among multiple heterogeneous technologies in the provisioned networks and hence will be able to serve multiple heterogeneous DUs.

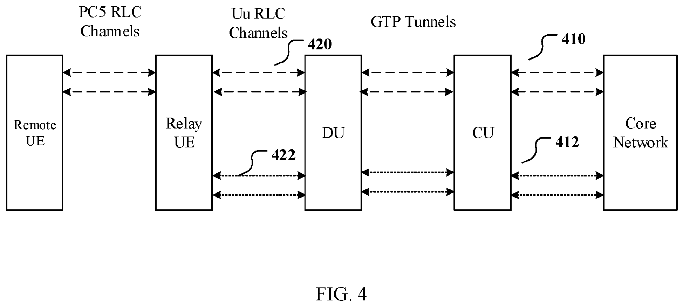

FIG. 4 shows an exemplary implementation of sidelink communication under a CU/DU split architecture. In this disclosure, from a data functionality perspective, data traffic for a UE includes Control Plane (CP) traffic and User Plane (UP) traffic. From a data direction perspective, data traffic includes uplink (UL) traffic and downlink (DL) traffic. For example, in FIG. 4, UL traffic may be initiated from the remote UE or the relay UE and transmitted to the CU, and the CU may further forward the UL traffic to the core network. DL traffic may be sent from the core network and delivered to the remote UE, or the relay UE. As shown in FIG. 4, since the remote UE does not have direct access to the DU, the DL/UL traffic destined to the remote UE needs to be relayed by the relay UE. Further, there may exist traffic 410 for the remote UE, and traffic 412 for the relay UE. In a CU/DU split deployment, it is critical for concerning network elements, such as the CU, the DU, and the relay UE to be able to identify the source and destination of the traffic, so as to route the traffic accordingly. For example, for traffic 410, the DU may use a Uu RLC channel 420 which is associated with the remote UE. For traffic 412, the DU may use a Uu RLC channel 422 which is associated with the relay UE. For another example, the relay UE may identify traffic destined to itself, and traffic destined to the remote UE. The relay UE may forward (or relay) traffic to the remote UE via the PC5 RLC channel.

In this disclosure, an identifier (ID) of a UE may be used as a label for routing traffic. The ID of the UE may include, for example, a local UE ID, a layer 2 (L2) source ID of the UE, a Cell Radio Network Temporary Identifier (C-RNTI) of the UE, etc. The local UE ID may include an identifier that may identify the UE within the scope of the CU, the DU, the relay UE, and the remote UE. The local UE ID may be assigned by the gNB (or the CU).

To support traffic delivery between a UE and a gNB (i.e., CU+DU), various resources need to be configured to the concerning network elements. For example, as shown in FIG. 4, these resources may include: the GPRS Tunnel Protocol (GTP) tunnel between the CU and the DU, the Uu interface, including Uu Radio Link Control (RLC) channels between the DU and the relay UE, and the PC5 interface, including PC5 RLC channels between the relay UE and the remote UE. Each type of resource may include multiple instances. For example, some resource instances may be allocated to support the traffic for the relay UE itself, whereas some resource instances may be allocated to support the traffic for the remote UE. Further, for a certain type of resource instance, such as Uu RLC channels, each resource instance may be configured with different characteristics. The characteristics may include: Quality of Service (QoS), data traffic type (e.g., user plane data, or control plane data), bearer mapping, etc. For example, a PC5 RLC channel supports higher QoS requirement and another PC5 RLC channel supports lower QoS requirement. For another example, a Uu RLC channel is mapped to Signaling Radio Bearer (SRB) 1, and another RLC channel is mapped to SRB2. For another example, a GTP tunnel is configured for remote UE traffic transmission, and another GTP tunnel is configured for relay UE traffic transmission. It is to be noted that the GTP tunnel, the Uu RLC channel, and the PC5 RLC channel are just exemplary protocol/link to be used, other types of protocols/links may be adapted for implementing data/signal transmission.

In this disclosure, various embodiments are disclosed to at least provide solutions for: identifying the remote UE at concerning network elements; configuring various resources for relaying traffic for the remote UE; authoring and delivering system information to support traffic relay to the remote UE. In these embodiments, various types of signaling may be used between the network elements such as the CU, the DU, the relay UE, and the remote UE. The signaling may include UE specific (or UE-associated) signaling, and non UE specific (or non UE-associated) signaling. More details will be described in following sections.

### Sidelink Communication with L2 Adaptation Layer

In this disclosure, an adaptation layer may be used to carry sidelink communication related information, such as ID of the remote UE, which includes the local ID of the remote UE as described earlier, or the L2 source ID of the remote UE, or another form of UE ID.

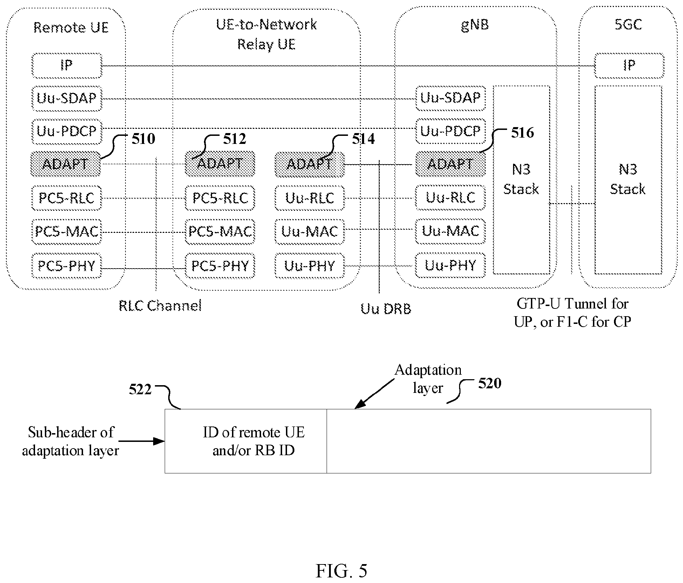

FIG. 5 shows an example protocol stack for L2 UE-to-Network relay. The underlying principle applies to both User Plane (UP) and Control Plane (CP). The adaptation layer 514 and 516 are placed on top of RLC sublayer at the Uu interface between Relay UE and gNB. Likewise, the adaptation layer 510 and 512 are placed on top of RLC sublayer at the PC5 interface between remote UE and relay UE.

In this disclosure, on the adaptation layer, a sub-header may be added to the relayed traffic between remote UE and relay UE, and/or between the relay UE and the DU. Remote UE related information, such as the ID of the remote UE, and/or the Radio Bearer (RB) ID may be encapsulated in the sub-header. Therefore, at a layer 2 level, the concerning network element may resolve the source or destination of the traffic. FIG. 5 shows a detailed view of the adaptation layer 520 with a sub-header 522. The sub-header is encapsulated with the ID of the remote UE and/or the RB ID. In other words, the ID of the remote UE and/or the RB ID may be carried in the sub-header 522. In one implementation, an RB may include a Signaling RB (SRB), or a data RB (DRB). In this disclosure, when data packet associated with the remote UE is communicated between the remote UE, the relay UE, and the DU, the adaptation layer sub-header may be used to carry identification information. The data packet may carry signaling as well as user data.

As shown in FIG. 5, on the Uu interface, the SDAP layer and the PDCP layer are terminated between remote UE and the gNB, whereas the RLC layer, the MAC layer, and the PHY layer are terminated between the remote UE and the relay UE, or between the relay UE and the gNB. As such, to support traffic relay for the remote UE, the PC5 RLC layer may need to be configured on the remote UE and the relay UE, and the Uu RLC layer may need to be configured on the relay UE and the gNB (or DU of the gNB). Not shown in FIG. 5, a Radio Resource Control (RRC) layer may also be terminated between remote UE and the gNB.

As shown in FIG. 5, in a CU/DU split scenario, the adaptation layer is terminated in the DU level. From the perspective of the remote UE, the F1-U tunnel corresponding to the remote UE's Uu Data Radio Bearer (DRB) may be setup between the DU and the CU. Similarly, the F1-C connection corresponding to the remote UE is maintained between DU and the CU.

### Embodiment 1 - not claimed at present

As described in previous section, in order to support the remote UE's traffic relaying, the adaptation layer is supported (or implemented) on both Uu interface and PC5 interface. The adaptation layer sub-header may include the ID of the remote UE as well as the RB ID of the relayed traffic. The relay UE may need to resolve the ID of the remote UE from the adaptation layer sub-header. Meanwhile, the remote UE may need to encapsulate the same ID when initiate traffic to be relayed by the relay UE. The ID of the remote UE may include a local ID which may identify the remote UE in the scope of the CU, the DU, the relay UE, and the remote UE. In this embodiment, the local ID of the remote UE may be assigned by the gNB.

In this embodiment, various implementations on how to request and distribute the local ID for the remote UE are described.

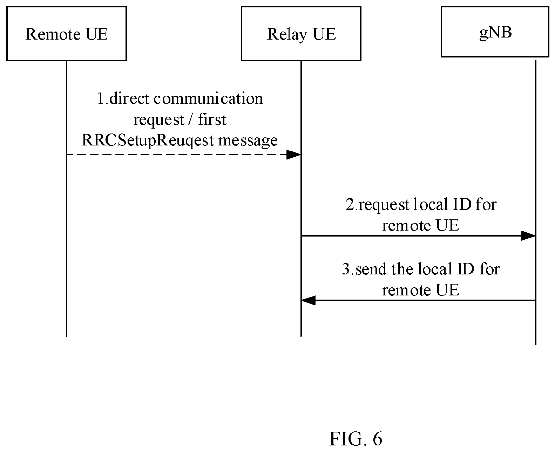

Referring to FIG. 6, the remote UE and the relay UE may obtain the local ID of the remote UE using the following steps. In this disclosure, the steps for each embodiment are for exemplary purpose only and other alternatives may apply. For example, only part of the steps may need to be performed. For another example, the sequence of the steps may be adjusted. For another example, several steps may be combined (e.g., several messages may be combined in one message). For another example, a single step may be split (e.g., one message may be sent via two sub-messages).

### Step 1

The remote UE initiates the sidelink communication by sending an RRC message, e.g., an *RRCSetupRequest* message via a PC5 RLC channel to the relay UE.

Alternatively, the remote UE may also send a layer-2 link establishment message (e.g., a direct communication request), or a first Uu RRC message in step 1 to trigger the local ID (for the remote UE) acquisition process. More details are described below.

### Step 2

The relay UE has no knowledge of the local ID of the remote UE yet. Upon receiving the *RRCSetupRequest* message, the relay UE may request the local ID of the remote UE from gNB. For example, the relay UE may send a SidelinkUEInformation or other RRC signaling to the gNB to request local ID of the remote UE. The SidelinkUEInformation or the other RRC signaling may include at least one of the following: a destination L2 ID of the remote UE, an indication (or identifier) of the remote UE, or an indication for requesting the local ID of remote UE.

As an alternative, when receiving the layer-2 link establishment message from remote UE, if the relay UE is in a connected state, the relay UE may request the local ID for the remote UE via SidelinkUEInformation or other RRC signaling.

As another alternative, when receiving the first Uu RRC message from remote UE, if the relay UE is in an idle or inactive state, the relay UE may request the local ID for the remote UE via SidelinkUEInformation or other RRC signaling.

### Step 3

Upon receiving the request for a local ID, the gNB (e.g. CU) may response to the relay UE with the local ID of remote UE via an RRCReconfiguration message.

In one implementation, the sub-header of the adaptation layer on PC5 interface may not be applicable for the SRBO message. That is, when the remote UE sends an SRBO message to the relay UE, the remote UE does not encapsulate the sub-header with its local ID. This may be because that the remote UE has not received the local ID assigned to it yet when the sidelink communication session is initiated. Therefore, when the relay UE receives the SRBO message from the remote UE, it needs to encapsulate the sub-header of the adaptation layer by itself, to ensure proper routing of the SRBO. It is to be noted that, only after the relay UE receives the local remote UE ID assigned by gNB (e.g., via step 3 above), the relay UE may encapsulate the local ID of remote UE in the adaptation layer sub-header and forwards SRBO RRC message to gNB.

In one implementation, after the gNB sends the local ID of the remote UE to the relay UE, the relay UE may forward the local ID to remote UE, for example, via a PC5 RRC signaling. The remote UE may then be able to encapsulate subsequent messages (e.g., SRB1, SRB2, etc.) and data packets to be relayed towards gNB.

In one implementation, the relay UE may support multiple remote UEs. To improve efficiency, the relay UE may request multiple local IDs from gNB at a time. For example, relay UE may send to the gNB the number of remote local IDs requested. The gNB may in turn response with a list of local IDs for multiple remote UEs to the relay UE. When later a remote UE tries to connect with the relay IE via the PC5 interface, or when the remote UE sends the first RRC message to the relay UE, the relay UE may select a local ID from the list of local IDs and assign it to the remote UE. The relay UE may further notify the remote UE of the assigned local UE. The relay UE may also choose to send the L2 source ID of the remote UE and its corresponding local ID to the gNB, so the gNB may establish a mapping between the local ID of the remote UE and its corresponding L2 source ID. In one implementation, a L2 detination ID of a UE may also be used to identify the particular UE.

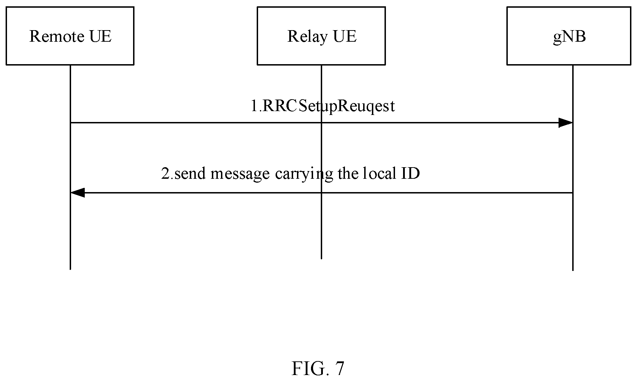

In one implementation, rather than being informed by the relay UE, the local ID for remote UE may be configured by gNB via an RRC signaling message towards the remote UE directly. For example, as shown in FIG. 7, upon receiving a RRCSetupRequest message from the remote UE in step 1, the gNB may send a message carrying the local UE ID in step 2. The message may include an RRCSetup message, an RRCResume message, an RRCReestablishment message, or an RRCReconfiguration message, etc.

In one implementation, the local ID for the remote UE may be delivered to the remote UE via the adaptation layer sub-header. For example, when the RRCResume / RRCReestablishment message is delivered to remote UE via a PC5 RLC channel, it may carry the adaptation layer sub-header which may include the local UE ID and/or RB ID info for the remote UE. The remote UE may decapsulate the local ID and/or RB ID from the adaptation layer sub-header. Subsequently, the remote UE may encapsulate the adaptation layer sub-header for the uplink traffic.

In one implementation, a UE may be switched from a direct connection with the gNB to an indirect connection. For example, if the signal coverage condition of the remote UE is determined to be below a threshold. This is referred to as a direct to indirect path switch scenario. In this scenario, the to-be-switched UE is a candidate remote UE. The gNB may assign a local ID for the candidate remote UE and find a suitable relay UE to support the switch. The gNB may then send the local ID for the candidate remote UE to either the relay UE or the candidate remote UE via, for example, an RRCReconfiguration message.

### Embodiment 2 - claimed

To properly route the traffic for the remote UE, the DU needs to know the local ID of the remote UE. Additionally, the CU and the DU should also be capable of associating the relay UE with the remote UE, for example, by using an ID of each UE.

For the CU/DU split scenario, the CU and the DU may communicate via the F1 interface. The F1 Application Protocol (F1AP) provides the signaling service between DU and the CU that is required to fulfil the F1AP functions. F1AP services are divided into two groups: non UE-associated (or non UE-specific) and UE-associated (or UE-specific). When an F1AP message is associated with a UE, a logical F1 connection associated with the UE is used to facilitate identifying the UE in the DU and the CU. The UE-associated logical F1-connection may be identified by IDs such as *GNB-CU UE F1AP ID* and *GNB-DU UE F1AP ID.* For example, for a received UE-associated F1AP message, the CU identifies the associated UE based on the *GNB-CU UE FIAP ID* Information Element (IE). Likewise, the DU identifies the associated UE based on the *GNB-DU UE* F1AP *ID* IE.

In one implementation, the UE-associated logical F1-connection may exist before the F1 UE context is setup in gNB-DU. When a UE initiates the RRC link setup, it sends an RRCSetupRequest message to the DU. The DU may transfer this initial RRC message to the CU. The transfer may be performed via an INITIAL UL RRC MESSAGE TRANSFER message. This message may contain the gNB-DU UE F1AP ID for the UE, and C-RNTI of the UE which is allocated by the DU.

In one implementation, for the DL RRC message transfer, the transfer message may contain the gNB-DU UE F1AP ID that DU allocates to the UE, as well as the gNB-CU UE F1AP ID that CU allocates to the UE. For the subsequent UE-specific F1AP signaling, the gNB-DU UE F1AP ID and gNB-CU UE F1AP ID are included so the DU and/or CU may be able to identify the specific UE.

In sidelink communication using a layer 2 relay scheme, when the DU receives the relayed Uplink Control Plane (UL CP) packet of the remote UE, DU should be able to associate the local UE ID of the remote UE contained in the adaptation layer sub-header with corresponding gNB-DU UE F1AP ID and/or gNB-CU UE F1AP ID of the remote UE. Then the DU may forward the remote UE's UL CP packet (which may carry RRC signaling) via remote UE's logical F1 connection. Similarly, for the remote UE's Downlink Control Plane (DL CP) packet, the CU should forward the remote UE's RRC signaling via remote UE's logical F1 connection, and the remote UE associated F1AP signaling should include the gNB-DU UE F1AP ID and/or the gNB-CU UE F1AP ID of the remote UE, which may be used by the DU to identify the corresponding remote UE. Then the DU encapsulates the adaptation layer sub-header of the relayed DL CP packet with remote UE's local ID and/or RB ID.

In this embodiment, various implementations are described to facilitate the DU to establish an association between an ID of the remote UE and the gNB-DU UE F1AP ID (or gNB-CU UE F1AP ID) of the remote UE. The ID of the remote UE may include a local ID (or referred to as local UE ID) assigned by the gNB.

### Implementation 1

In this implementation, the relay UE is aware of the local ID of the remote UE.

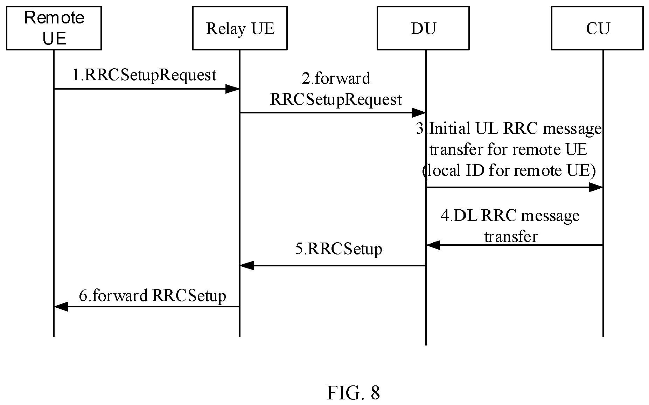

Refer to FIG. 8 for an exemplary message flow in this implementation.

### Step 1

The relay UE receives the *RRCSetupRequest* message from remote UE. The relay UE may encapsulate the adaptation layer sub-header of the *RRCSetupRequest* message with local ID and RB ID of the remote UE.

### Step 2

The relay UE forwards the relayed *RRCSetupRequest* message to the DU via a Uu RLC channel.

### Step 3

Upon receiving the *RRCSetupRequest* message, the DU may detect that it is corresponding to SRBO message based on the adaptation layer sub-header. The DU may record the association between relay UE and remote UE.

The DU sends the INITIAL UL RRC MESSAGE TRANSFER to the CU. The INITIAL UL RRC MESSAGE TRANSFER may include at least one of the following fields: gNB-DU UE F1AP ID for the remote UE, C-RNTI for the remote UE, ID of the remote UE, RRC-container, etc. The ID of the remote UE may be the local ID assigned by the gNB, or the L2 source ID of the remote UE. It is to be noted that the local ID is known by the CU as the CU assigns the local ID.

Upon receiving the INITIAL UL RRC MESSAGE TRANSFER, the CU may associate the remote UE based on the ID for remote UE with its L2 source ID. The CU may also associate the remote UE with the relay UE. The CU may also associate the remote UE's L2 source ID or local ID with the relay UE (which is connected to the remote UE via the PC5 interface) because the local ID of remote UE is previously requested by the given relay UE, or because the local ID is assigned to the remote UE associated with the relay UE when the CU assigns the local ID. In addition, the CU may be aware of the C-RNTI of the remote UE, as well as the gNB-DU UE F1AP ID of the remote UE based on the INITIAL UL RRC MESSAGE TRANSFER message.

### Step 4

The CU sends the DL RRC MESSAGE TRANSFER message to the DU, which may include the gNB-DU UE F1AP ID of the remote UE, the gNB-CU UE F1AP ID of the remote UE, the SRB ID (or RB ID) assigned to the remote UE, and an RRC container. The RRCcontainer may include the RRCSetup message sent from gNB to remote UE.

### Step 5

Upon receiving the DL RRC MESSAGE TRANSFER, the DU may be able to identify the remote UE based on the gNB-DU UE F1AP ID (which is in the message), as well as the corresponding SRB of the RRC message within the RRCcontainer. Then the DU may encapsulate the adaptation layer sub-header with the remote UE's local ID and SRB ID and then deliver the RRC message (e.g., RRCSetup) to the relay UE.

### Step 6

Upon receiving the RRC message via Uu RLC channel, the relay UE may be able to identify the message is destined to the remote UE based on the adaptation layer sub-header. The DU remove the adaptation layer sub-header and then forwards the RRCSetup message to remote UE via PC5 RRC channel.

### Implementation 2

This implementation is similar to implementation 1 and also include 6 steps. For simplicity, only the step with variation is described below. Other steps may be referred back to the corresponding steps in implementation 1 above.

### Step 3

Upon receiving the *RRCSetupRequest* message, the DU may detect that it is corresponding to SRBO message based on the adaptation layer sub-header. The DU may record the association between relay UE and remote UE.

The DU sends the INITIAL UL RRC MESSAGE TRANSFER to the CU. The INITIAL UL RRC MESSAGE TRANSFER may include at least one of the following fields: gNB-DU UE F1AP ID for the remote UE, C-RNTI for remote UE, ID of the remote UE, RRC-container, gNB-DU UE F1AP ID for the relay UE, gNB-DU UE F1AP ID for the relay UE, etc. The ID of remote UE may be the local ID assigned by gNB or the L2 source ID of remote UE. It is to be noted that the local ID is known by the CU as the CU assigns the local ID.

Upon receiving the INITIAL UL RRC MESSAGE TRANSFER, the CU may associate the remote UE with relay UE based on the gNB-DU UE F1AP ID of the relay UE and/or gNB-CU UE F1AP ID of the relay UE. In addition, the CU may be aware of the C-RNTI of the remote UE, as well as the gNB-DU UE F1AP ID of the remote UE based on the INITIAL UL RRC MESSAGE TRANSFER message.

### Implementation 3

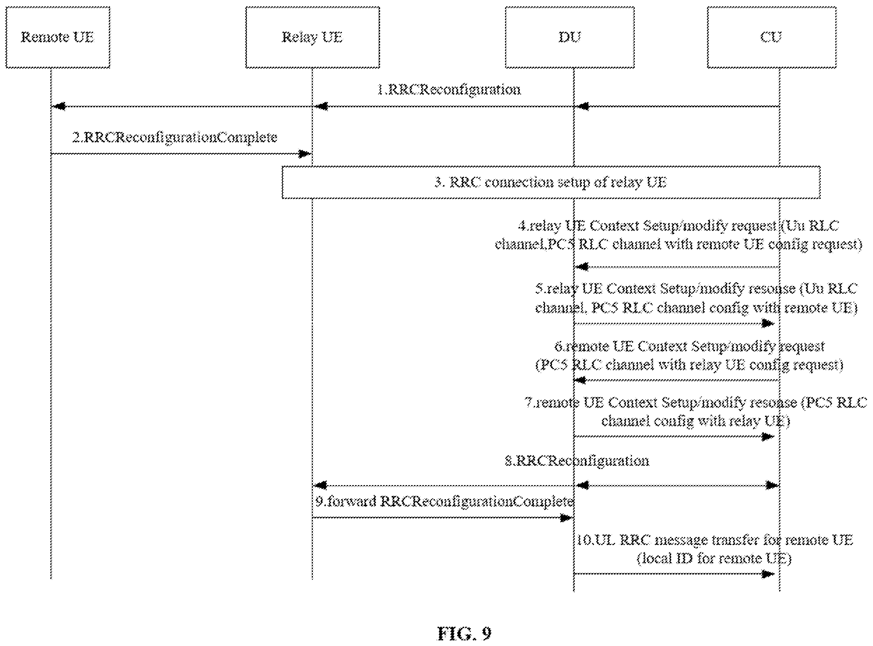

As described above, in a direct to indirect path switch scenario, a UE may be switched from a direct connection to the gNB to an indirect connection. Before the switch, the gNB may configure the UE for the upcoming switch. Refer to FIG. 9 for an example. As described above, the gNB includes the CU and the DU.

### Step 1

The gNB determines that the remote UE needs to be switched to an indirect access via the relay UE. The CU may allocate a local ID for the remote UE via an RRCReconfiguration message. The RRCReconfiguration may also include information related to the assigned relay UE.

### Step 2

As a response, the remote UE sends an *RRCReconfigurationComplete* message to the relay UE. An adaptation layer at PC5 interface is encapsulated for the *RRCReconfigurationComplete* message. The adaptation layer has a sub-header. The remote UE may encapsulate the adaptation layer sub-header with the ID of the remote UE and RB ID. The ID of the remote UE may include one of the local ID of the UE, or the L2 source ID of the remote UE.

### Step 3

The relay UE may be in an inactive or an idle state and may not have an RRC connection with the gNB. The relay UE may initiate an RRC connection setup with the gNB and send the L2 source ID of itself to the gNB. The gNB may identify this relay UE to be the relay UE that gNB previously assigned to the remote UE to perform path switch.

### Step 4

The CU configures the UE context of the relay UE for supporting the sidelink communication. The CU may send an F1AP signaling (e.g., UEContext setup or UEContext modification request message) to the DU for the relay UE (i.e., the signaling targets the relay UE), which may include at least one of following fields:
- a CU level relay ID identifying the relay UE in the CU;
- a DU level relay ID identifying the relay UE in the DU;
- an ID of the remote UE;
- a request for configuring a PC5 RLC channel between the relay UE and the remote UE; or
- a request for configuring a Uu RLC channel between the relay UE and the gNB.

### Step 5

The DU may configure the corresponding resources as requested by the CU in step 4. The DU may then send an F1AP signaling (e.g., UEContext setup response message or UEContext modification response message) to the CU, which may include the PC5 RLC channel and Uu RLC channel configuration information. Details on the PC5 RLC channel and Uu RLC channel configuration information will be described in another emobidment which will be found in a later section.

### Step 6

The CU configures the UE context of the remote UE for supporting the sidelink communication. The CU may send an F1AP signaling (e.g., UEContext setup request message) to the DU for the remote UE (i.e., the signaling targets the remote UE), which may include at least one of following fields:
- a CU level remote ID identifying the remote UE in the CU;
- an ID of the remote UE;
- a request for configuring a PC5 RLC channel between the relay UE and the remote UE; or
- a bearer mapping configuration.

The ID of the remote UE may include the local ID assigned by gNB or the L2 source ID of remote UE.

### Step 7

The DU may configure the corresponding resources as requested by the CU in step 6. The DU may then send an F1AP signaling (e.g., UEContext setup response message or UEContext modification response message) to the CU, which may include the PC5 RLC channel configuration information.

### Step 8

The CU may send an RRCreconfiguration message to the relay UE to configure the Uu RLC channel and/or the PC5 RLC channel for the traffic relaying of remote UE.

### Step 9

Now the relay UE has set up the RRC connection with the gNB, and the Uu RLC channel for supporting remote UE traffic relay has also been configured. The relay UE may forward the RRCReconfigurationComplete message received in step 2 from the remote UE to the gNB.

### Step 10

If the DU has previously served the remote UE before the path switch, the DU may identify the remote UE via the ID of the remote UE encapsulated in the adaptation layer sub-header and then the DU may send a UL RRC MESSAGE TRANSFER message to the CU. The UL RRC MESSAGE TRANSFER may include at least one of the following fields: a gNB-DU UE F1AP ID for the remote UE, or a gNB-CU F1AP ID for the remote UE. Upon receiving the UL RRC MESSAGE TRANSFER, the CU may associate the remote UE with relay UE. For example, based on the gNB-CU F1AP ID for the remote UE, or the gNB-DU F1AP ID for the remote UE. It is to be noted that the CU may identify the corresponding relay UE based on the association between remote UE ID and relay UE ID.

### Implementation 4

In this implementation, a base station handover condition is considered.

If a UE performs a direct to indirect path switch and switches to a relay UE served by a different gNB, the source gNB needs to perform handover preparation procedure. During this procedure, the target gNB may assign the local ID for the to-be-switched UE and send the local ID to the source gNB. The source gNB then sends this local ID to the to-be-switched UE via a message such as an RRC signaling.

Alternatively, the CU of the target gNB may send the local ID for the remote UE to the DU of the target gNB together with other remote UE context.

### Embodiment 3 claimed

To support sidelink communication, various resources need to be configured and the configuration applies to multiple network elements and interfaces. Referring back to FIG. 4, following the data path between the remote UE and the CU, theses interfaces need to be configured: the interface between remote UE and the relay UE (i.e., PC5 interface); the interface between the relay UE and the DU (i.e., Uu interface).

Specifically, the Uu RLC channels connecting the DU and the relay UE, and the PC5 RLC channels connecting the relay UE and the remote UE need to be configured.

In order to properly route the Uplink User Plane traffic, the DU should be able to determine the GTP User Plane (GTP-U) tunnel associated with remote UE's DRB based on the ID of the remote UE, and/or Radio Bearer (RB) information in adaptation layer sub-header. The RB information may include an RB ID. Then the DU may be able to deliver the Uplink User Plane traffic of the remote UE via the GTP-U tunnel associated with or assigned to the remote UE.

Similarly, the CU may deliver the remote UE's Downlink User Plane traffic via remote UE's GTP-U tunnel. On the DU side, upon receiving the remote UE's Downlink User Plane traffic, based on the GTP-U tunnel used, the DU identifies the remote UE and its associated RB information (e.g., RB ID, or DRB ID). The DU may further establish an association between the ID of the remote UE/RB ID and the remote UE's GTP-U tunnel. The DU may then encapsulate the relayed Downlink User Plane data packet with adaptation layer sub-header, which may include the ID of the remote UE and RB ID. After the encapsulation, the DU may map the data packet to the Uu RLC channel assigned to the remote UE and deliver the data packet to the corresponding Uu RLC channel.

Referring to FIG. 4, the DU is able to distinguish data packet destined to the remote UE from data packet destined to the relay UE. The DU essentially connects (or maps) the GTP-U tunnel for the remote UE to the corresponding Uu RLC channel associated with the remote UE. It is also to be noted, that there may be multiple Uu RLC channels, each channel may be mapped to a QoS flow, and each channel may also be mapped to an RB.

In this embodiment, to support sidelink communication, the Uu RLC channel, the PC5 RLC channel, and the bearer mapping rule between remote UE's RB/GTP-U tunnel and the Uu RLC channel may be configured. The configuration may be performed by using signaling between the CU and the DU. More details are described below.

### Uu RLC Channel Configuration

The Uu RLC channel configuration may include following parameters:
- a channel ID of the Uu RLC channel;
- a QoS configuration of the Uu RLC channel;
- a mapping between a QoS flow and the Uu RLC channel;
- a QoS flow level QoS profile;
- a control plane traffic type;
- an RLC mode of the Uu RLC channel; or
- a bearer mapping configuration.

In the list above, the mapping between the QoS flow and the Uu RLC channel may be based on at least one of: an ID of the remote UE, a QoS Flow Identifier (QFI), or a channel ID of the Uu RLC channel. For example, a QFI may be mapped to a channel ID, or a combination of an ID of the remote UE and the QFI may be mapped to a channel ID.

In one implementation, a QoS flow may also be referred to as profile QoS flow.

The QoS profile of the Uu RLC channel may include at least one of packet delay budget (PDB) information, or a QoS flow level QoS profile. The PDB indicates a packet delay budget between the relay UE and remote UE.

As described earlier, the ID of the remote UE may include a local UE ID assigned by the gNB (or the CU), a L2 source ID of the remote UE, or a C-RNTI of the remote UE.

The control plane traffic type may include one of: an SRB0, an SRB1, an SRB2, an SRB3, etc. The control plane traffic type may also be represented by a priority level.

The CU may send various types of configuration messages to the DU to configure the Uu RLC channel.

In one implementation, the CU may configure the Uu RLC channel via a relay UE associated F1AP signaling which may include one of: a PC5 RLC channel setup request, a Uu RLC channel modification request, or a PC5 RLC channel release request. Each request may include a list of Uu RLC channels that need to be setup (or modified) together with corresponding Uu RLC channel configuration. The Uu RLC channel configuration may include the Uu RLC channel configuration parameters listed above in any combinations.

In one implementation, the CU may configure the Uu RLC channel via a non UE-associated F1AP signaling. In this case, in addition to the list of Uu RLC channels that need to be setup (or modified) and the corresponding Uu RLC channel configuration, the message may further include an ID of the relay UE, so the relay UE may be identified by the DU.

As a response, the DU may send a response message (e.g., a response F1AP message) to the CU, which may include a list of Uu RLC channels that have been setup. Each Uu RLC channel in the list may include a Uu RLC channel ID and/or Uu logical channel ID corresponding to the Uu RLC channel. In one implementation, the detailed Uu RLC channel configuration for each of the Uu RLC channel may be carried in the DU To CU RRC Information. In case there are some Uu RLC channels failed to be setup, the response message may also include a list of Uu RLC channels that were failed to setup. Each Uu RLC channel in the list may include a Uu RLC channel ID and a failure cause for the corresponding Uu RLC channel. Further, if the configuration message from the CU includes a list of Uu RLC channels that need to be modified, the DU may send a response message to the CU, which may include a list of Uu RLC channels that have been modified. Each Uu RLC channel in the list may include a Uu RLC channel ID. Similarly, an error condition may also be reported back to the CU.

### PC5 RLC Channel Configuration

The PC5 RLC channel configuration may include:
- a channel ID of the PC5 RLC channel;
- a QoS configuration of the PC5 RLC channel;
- a mapping between a QoS flow and the PC5 RLC channel;
- a QoS flow level QoS;
- a control plane traffic type;
- an RLC mode of the PC5 RLC channel;
- bearer mapping information; or

It is to be noted that the PC5 RLC channel configuration may be applied to either a relay UE or a remote UE. When the PC5 RLC channel configuration is applied to the relay UE, the PC5 RLC channel configuration may further include an ID of the remote UE. When the PC5 RLC channel configuration is applied to the remote UE, the PC5 RLC channel configuration may further include an ID of the relay UE. The ID of the relay UE ID may include one of: gNB-DU UE F1AP ID of the relay IE, gNB-CU F1AP ID of the relay UE, a local ID assigned by the CU for the relay UE, or C-RNTI of the relay UE.

In the list above, the mapping between the QoS flow and the PC5 RLC channel may be based on at least one of: an ID of the remote UE, a QoS Flow Identifier (QFI), or a channel ID of the PC5 RLC channel. For example, a QFI may be mapped to a channel ID, or a combination of an ID of the remote UE and the QFI may be mapped to a channel ID.

In one implementation, a QoS flow may also be referred to as profile QoS flow.

The QoS profile of the PC5 RLC channel may include at least one of packet delay budget (PDB) information, or a QoS flow level QoS profile. The PDB indicates a packet delay budget between the gNB and relay UE, or between DU and the relay UE.

The control plane traffic type may include one of: an SRB0, an SRB1, an SRB2, an SRB3, etc. The control plane traffic type may also be represented by a priority level.

The CU may send various types of messages to the DU to configure the PC5 RLC channel.

In one implementation, the CU may configure the PC5 RLC channel via a relay UE associated F1AP signaling which may include one of: a PC5 RLC channel setup request, a PC5 RLC channel modification request, or a PC5 RLC channel release request. Each request may include a list of PC5 RLC channels that need to be setup (or modified) together with corresponding PC5 RLC channel configuration. The PC5 RLC channel configuration may include the PC5 RLC channel configuration parameters listed above in any combinations.

In one implementation, the CU may configure the PC5 RLC channel via a remote UE associated F1AP signaling which may include one of: a PC5 RLC channel setup request, a PC5 RLC channel modification request, a PC5 RLC channel release request, a Uu DRB setup request, a Uu DRB modification request, a Uu DRB release request, a GTP-U setup request, a GTP-U modification request, or a GTP-U release request. Each request may include a list of PC5 RLC channels that need to be setup (or modified) together with corresponding PC5 RLC channel configuration. The PC5 RLC channel configuration may include the PC5 RLC channel configuration parameters listed above in any combinations.

In one implementation, the CU may configure the PC5 RLC channel via a non UE-associated F1AP signaling. In this case, in addition to the list of PC5 RLC channels that need to be setup (or modified) and the corresponding PC5 RLC channel configuration, the message may further include an ID of the relay UE, and/or an ID or the remote UE.

As a response, the DU may send a response message (e.g., a response F1AP message) to the CU, which may include a list of PC5 RLC channels that have been setup. Each Uu RLC channel in the list may include a PC5 RLC channel ID and/or PC5 logical channel ID corresponding to the PC5 RLC channel. In one implementation, the detailed Uu RLC channel configuration for each of the PC5 RLC channel may be carried in the DU To CU RRC Information. In case there are some PC5 RLC channels failed to be setup, the response message may also include a list of PC5 RLC channels that were failed to setup. Each PC5 RLC channel in the list may include a PC5 RLC channel ID and a failure cause for the corresponding PC5 RLC channel. If the configuration message from the CU includes a list of PC5 RLC channels that need to be modified, the DU may send a response message to the CU, which may include a list of PC5 RLC channels that have been modified. Each PC5 RLC channel in the list may include a PC5 RLC channel ID. Similarly, an error condition may also be reported back to the CU.

### Downlink User Plane (DL UP) Bearer Mapping Configuration

The CU may send various types of messages to the DU to configure the DL UP bearer mapping.

In one implementation, the CU may send the bearer mapping configuration to the DU via relay UE associated signaling. The bearer mapping configuration may include the mapping between the GTP-U tunnel of the remote UE and the Uu RLC channel of the relay UE. As an example, the GTP-U tunnel may be identified by a combination of an IP address of the tunnel and a Tunnel Endpoint Identifier (TEID) of the tunnel, and the Uu RLC channel may be identified by a channel ID.

In one implementation, the CU may send the bearer mapping configuration to the DU via remote UE associated signaling. The bearer mapping configuration may include the mapping between the GTP-U tunnel of the remote UE and the Uu RLC channel of the relay UE. As an example, the GTP-U tunnel may be identified by a combination of an IP address of the tunnel and a TEID of the tunnel. The Uu RLC channel may be identified by a combination of the channel ID and an ID of the relay UE. The ID of the relay UE may include gNB-DU UE F1AP ID and gNB-CU F1AP ID of the relay UE.

In one implementation, the CU may send the bearer mapping configuration to the DU via non UE-associated F1AP signaling. The bearer mapping configuration may include the mapping between remote UE's GTP-U tunnel and relay UE's Uu RLC channel. As an example, the GTP-U tunnel may be identified by a combination of an IP address of the tunnel and a TEID of the tunnel, and the Uu RLC channel may be identified by a combination of the channel ID and an ID of the relay UE.

### Downlink Control Plane (DL CP) Bearer Mapping Configuration

The CU may send various types of messages to the DU to configure the DL CP bearer mapping.

In one implementation, the CU may send the bearer mapping configuration to the DU via relay UE associated signaling. The bearer mapping configuration may include the mapping between an SRB of the remote UE and a Uu RLC channel of the relay UE. As an example, the SRB may be identified by a combination of an ID of the SRB and an ID of the remote UE. The ID of the remote UE may include one of: gNB-DU UE F1AP ID of the remote UE, gNB-CU F1AP ID of the remote UE, or local ID of the remote UE. The local ID may be assigned by the CU/gNB. The Uu RLC channel of the relay UE may be identified by an ID of the Uu RLC channel.

In one implementation, the CU may send the bearer mapping configuration to the DU via remote UE associated signaling. The bearer mapping configuration may include the mapping between an SRB of the remote UE and a Uu RLC channel of the relay UE. As an example, the SRB may be identified by an ID of the SRB. The Uu RLC channel of the relay UE may be identified by a combination of an ID of the relay UE and an ID of the Uu RLC channel. The ID of the relay UE may include one of: gNB-DU UE F1AP ID of the relay UE, or gNB-CU F1AP ID of the relay UE.

In one implementation, the CU may send the bearer mapping configuration to the DU via non UE-associated F1AP signaling. The bearer mapping configuration may include the mapping between an SRB of the remote UE and a Uu RLC channel of the relay UE. As an example, the SRB may be identified by a combination of an ID of the SRB and an ID of the remote UE. The Uu RLC channel of the relay UE may be identified by a combination of an ID of the relay UE and an ID of the Uu RLC channel.

### Embodiment 4 - not claimed at present

The AMF may provide the Radio Access Network (RAN) with indication about the UE authorization status on ProSe Direct Discovery and ProSe Direct Communication (i.e. as 5G ProSe UE for ProSe Direct Discovery, or as 5G ProSe UE for ProSe Direct Communication), UE-to-Network Relay Discovery and Communication (i.e. as 5G ProSe Layer-2 Remote UE, as 5G ProSe Layer-2 UE-to-Network Relay, or as Layer-3 UE-to-Network Relay).

In order for the DU to allocate resources for the relay UE, the CU may deliver authorization Information Element (IE), such as a 5G ProSe Layer-2 UE-to-Network Relay IE, or a Layer-3 UE-to-Network Relay authorization IE to the DU via a message, such as UE context setup request message, or UE context modification request message. For example, if the relay UE is authorized for performing Layer-2 UE-to-Network relay, the DU may forward the first RRC message of remote UE, i.e. allocate the gNB-DU UE F1AP ID for remote UE and transmit the initial UL RRC message transfer for the remote UE. Otherwise if the relay UE is not authorized for performing Layer-2 UE-to-Network relay, the DU may discard the first RRC message. Further, the DU may use the authorization IE to check whether the sidelink discovery and/or communication resources should be configured for the relay UE. If the relay UE is authorized for Layer-3 UE-to-Network Relay, DU may allocate sidelink discovery and sidelink communication resource to the relay UE.

The DU may also need to check whether the remote UE could be allocated with the sidelink discovery and/or communication resource, therefore the CU also needs to send to the DU the 5G ProSe Layer-2 Remote UE authorization IE.

In one implementation, in order to support the ProSe discovery, the CU may receive the ProSe Direct Discovery IE from the Access & Mobility Management Function (AMF). The CU may then send the ProSe Direct Discovery authorization IE to DU.

During a handover procedure for a relay UE, a remote UE, or a ProSe discovery capable UE, the source gNB may send the UE authorization information to the target gNB in the handover request message, which may include the 5G ProSe Layer-2 UE-to-Network Relay IE, the Layer-3 UE-to-Network Relay authorization IE, the 5G ProSe Layer-2 Remote UE authorization IE, or the ProSe Direct Discovery authorization IE.

### Embodiment 5 - not claimed at present

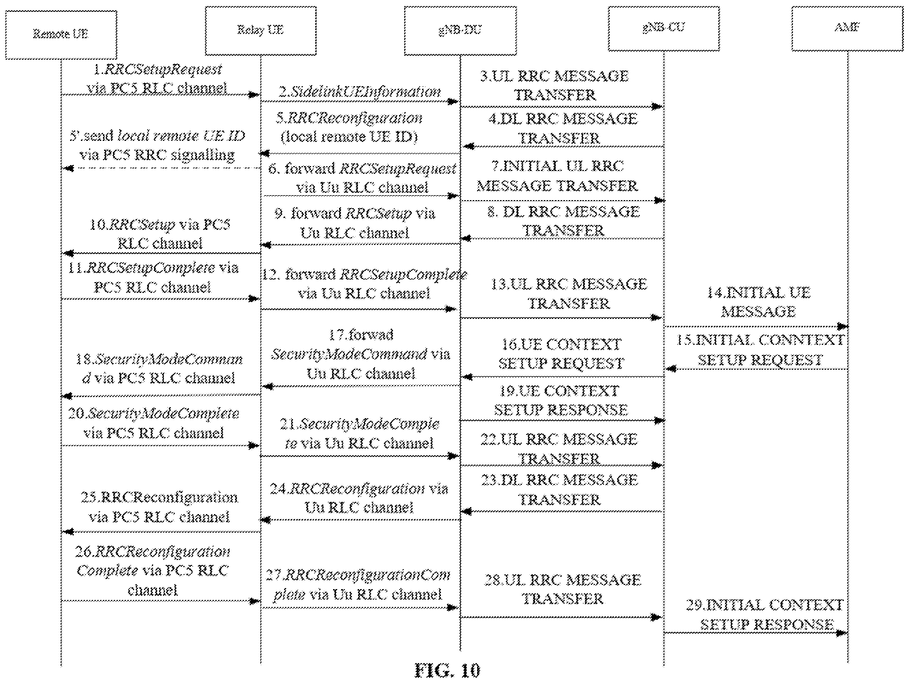

In this embodiment, an example signaling procedure for the initial access of a remote UE is described using FIG. 10 as a reference.

### Step 1

The remote UE sends an *RRCSetupRequest* message via a PC5 RLC channel to the relay UE.

### Steps 2-5

The relay UE has no knowledge of the local ID of the remote UE. The relay UE may request the local ID from the gNB by sending a SidelinkUEInformation or other RRC signaling to the gNB. The SidelinkUEInformation or other RRC signaling may include at least one of the following: a destination L2 ID of the remote UE, an indication (or identifier) of the remote UE, or an indication for requesting the local ID of remote UE.

Upon receiving the SidelinkUEInformation, the gNB (e.g., CU) may assign the local ID for the remote UE and send it to the relay UE via RRCReconfiguration message. If adaptation layer via PC5 interface is supported, the remote UE may also need to know the local ID so that it may encapsulate SRB messages (e.g., SRB1, SRB2, etc.) and data packets to be relayed towards the gNB. In this case, the relay UE may send the local remote UE ID to remote UE via PC5 RRC signaling, as shown in the step 5.

### Step 6

Once the relay UE has acquires the local ID of the remote UE, the relay UE may encapsulate the local ID of remote UE in the adaptation layer sub-header, and then forward the RRCSetupRequest message via Uu RLC channel to gNB-DU. In one implementation, the Uu RLC channel includes a predetermined RLC channel for remote UE's SRBO message delivery.

### Step 7

Upon receiving the RRCSetupRequest message from relay UE via the Uu RLC channel, the DU may determine that it is corresponding to SRBO message based on the adaptation layer sub-header. The DU may identify that it is the first RRC message from the remote UE. The DU may allocate a C-RNTI for the remote UE and record the association between relay UE and remote UE. Then the DU allocate the gNB-DU UE F1AP ID for remote UE, and send an INITIAL UL RRC MESSAGE TRANSFER to the CU. The INITIAL UL RRC MESSAGE TRANSFER may include at least one of the following fields: gNB-DU UE F1AP ID for the remote UE, C-RNTI for the remote UE, ID of the remote UE, RRC-container, etc. The ID of the remote UE may be the local ID assigned by the gNB, or the L2 source ID of the remote UE.

### Step 8

Upon receiving the INITIAL UL RRC MESSAGE TRANSFER, the CU may associate the remote UE based on the ID for remote UE with its L2 source ID. The CU may also associate the remote UE with the relay UE. The CU may also associate the remote UE's L2 source ID or local ID with the relay UE (which is connected to the remote UE via the PC5 interface) because the local ID of remote UE is previously requested by the given relay UE, or because the local ID is assigned to the remote UE associated with the relay UE when the CU assigns the local ID. In addition, the CU may be aware of the C-RNTI of the remote UE, as well as the gNB-DU UE F1AP ID of the remote UE based on the INITIAL UL RRC MESSAGE TRANSFER message.

Upon receiving the INITIAL UL RRC MESSAGE TRANSFER, CU may associate the remote UE based on the ID for remote UE. For example, CU may associate the remote UE's L2 source ID and the PC5 connected relay UE since the local ID of remote UE is requested by the relay UE. In addition, CU may be aware of the C-RNTI of the remote UE, as well as the gNB-DU UE F1AP ID of the remote UE. The CU allocates a gNB-CU UE F1AP ID for the remote UE and generates a *RRCSetup* message towards the remote UE. Then the CU sends a DL RRC MESSAGE TRANSFER to DU, which may include the gNB-DU UE F1AP ID of the remote UE, the gNB-CU UE F1AP ID of the remote UE, the SRB ID assigned to the remote UE, and an RRC container. The RRCcontainer may include the RRCSetup message sent from gNB to remote UE.

### Step 9

Upon receiving the DL RRC MESSAGE TRANSFER, the DU may be able to identify the remote UE based on the gNB-DU UE F1AP ID (which is in the message), as well as the corresponding SRB of the RRC message within the RRCcontainer. Then the DU may encapsulate the adaptation layer sub-header with the remote UE's local ID and RB ID and then deliver the RRC message (e.g., RRCSetup) to the relay UE via a Uu RLC channel.

### Step 10

The relay UE removes the adaptation layer sub-header and then delivers the RRCSetup message to the remote UE via PC5 RRC channel.

### Steps 11-13

The remote UE sends an RRCSetupComplete message to the DU which is forwarded by the relay UE. At this time, the adaptation layer sub-header may be encapsulated by the remote UE. The relay UE may check the adaptation layer sub-header to map the RRCSetupComplete message to a corresponding Uu RLC channel and then send the packet to the DU.

The DU removes the adaptation layer sub-header, encapsulates the R RRCSetupComplete RC message in the UL RRC MESSAGE TRANSFER message for the remote UE and sends it to the CU.

### Step 14

The CU sends an INITIAL UE MESSAGE to the AMF.

### Step 15

The AMF sends an INITIAL CONTEXT SETUP REQUEST message to the CU.

### Step 16

The CU sends a UE CONTEXT SETUP REQUEST message to establish the remote UE context in the DU. In this message, it may also encapsulate the *SecurityModeCommand* message.

### Steps 17-18

The DU sends the *SecurityModeCommand* message to the remote UE which is forwarded by the relay UE.

### Step 19

The gNB-DU sends a UE CONTEXT SETUP RESPONSE message for remote UE to the CU.

### Steps 20-21

The remote UE responds with a *SecurityModeComplete* message and send it to DU via the relay UE.

### Step 22

The DU encapsulates the RRC message in the UL RRC MESSAGE TRANSFER message and sends it to the CU.

### Step 23

The CU generates an *RRCReconfiguration* message for remote UE and encapsulates it in the DL RRC MESSAGE TRANSFER message.

### Steps 24-25

The DU sends *RRCReconfiguration* message to the remote UE.

### Steps 26-26

The remote UE sends an *RRCReconfigurationComplete* message to the DU.

### Step 28

The DU encapsulates the RRC message in the UL RRC MESSAGE TRANSFER message and send it to the gNB-CU.

### Step 29

The CU sends an INITIAL CONTEXT SETUP RESPONSE message to the AMF. At this stage, the RRC connection setup has been completed for the CU/DU split scenario. During this procedure, the CU may send an RRCReconfiguration message to the relay UE and/or the remote UE for Uu RLC channel and/or PC5 RLC channel configuration as well as bearer mapping configuration. Once these configurations are completed, the remote UE may initiate more service request to establish Data Radio Bearers (DRBs). Both the relay UE and remote UE may be reconfigured by the gNB for Uu RLC channel and/or PC5 RLC channel, as well as the bearer mapping configuration.

The description and accompanying drawings above provide specific example embodiments and implementations. The described subject matter may, however, be embodied in a variety of different forms, all of which falling within the scope of the appended claims.

Accordingly, embodiments may, for example, take the form of hardware, software, firmware, storage media or any combination thereof. For example, the method embodiments described above may be implemented by components, devices, or systems including memory and processors by executing computer codes stored in the memory.

Throughout the specification and claims, terms may have nuanced meanings suggested or implied in context beyond an explicitly stated meaning. Likewise, the phrase "in one embodiment/implementation" as used herein does not necessarily refer to the same embodiment and the phrase "in another embodiment/implementation" as used herein does not necessarily refer to a different embodiment. It is intended, for example, that claimed subject matter includes combinations of example embodiments in whole or in part.

In this disclosure, various embodiments may be combined to cover more scenarios and/or provide more solutions. A single embodiment may be split to cover a partial functionality. Steps in an embodiment are for exemplary purpose only, and may be adjusted.

In general, terminology may be understood at least in part from usage in context. For example, terms, such as "and", "or", or "and/or," as used herein may include a variety of meanings that may depend at least in part on the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein, depending at least in part upon context, may be used to describe any feature, structure, or characteristic in a singular sense or may be used to describe combinations of features, structures or characteristics in a plural sense. Similarly, terms, such as "a," "an," or "the," may be understood to convey a singular usage or to convey a plural usage, depending at least in part upon context. In addition, the term "based on" may be understood as not necessarily intended to convey an exclusive set of factors and may, instead, allow for the existence of additional factors not necessarily expressly described, again, depending at least in part on context.

Reference throughout this specification to features, advantages, or similar language does not imply that all of the features and advantages that may be realized with the present solution should be or are included in any single implementation thereof. Rather, language referring to the features and advantages is understood to mean that a specific feature, advantage, or characteristic described in connection with an embodiment is included in at least one embodiment of the present solution. Thus, discussions of the features and advantages, and similar language, throughout the specification may, but do not necessarily, refer to the same embodiment.

Furthermore, the described features, advantages and characteristics of the present solution may be combined in any suitable manner in one or more embodiments. One of ordinary skill in the relevant art will recognize, in light of the description herein, that the present solution may be practiced without one or more of the specific features or advantages of a particular embodiment. In other instances, additional features and advantages may be recognized in certain embodiments that may not be present in all embodiments of the present solution

Therefore, the scope of the present invention is defined in the following appended claims.

## Claims

1. A method performed by a Distributed Unit, DU, of a wireless communication node in a wireless network, the method comprising:
upon receiving a RRCSetupRequest message from a remote UE via a relay UE, transmitting a first transferring message to a Central Unit, CU, of the wireless communication node, wherein the first transferring message is an INITIAL UL RRC MESSAGE TRANSFER message and comprises an ID of the remote UE and a DU level relay UE ID identifying the relay UE in the DU, and wherein the first transferring message enables the CU to associate the remote UE with the relay UE, and wherein the relay UE serves as a relay between the remote UE, which is connected to the relay UE via PC5 interface, and the wireless communication node.

2. The method of claim 1, wherein the ID of the remote UE comprises: a local UE ID identifying the remote UE in a scope of the relay UE in the wireless network.

3. The method of claim 1, wherein the DU level relay UE ID comprises a gNB-DU UE F1AP ID of the relay UE.

4. The method of claim 1, further comprising:
receiving a first message from a CU of the wireless communication node for configuring a Uu RLC channel between the DU and the relay UE; or
receiving a second message from the CU for configuring a relay UE side configuration of a PC5 RLC channel between the relay UE and the remote UE,
wherein the Uu RLC channel or the PC5 RLC channel are used to deliver traffic destined to the remote UE, and wherein the relay UE serves as a relay between the remote UE and the wireless communication node.

5. The method of claim 4, further comprising:
receiving a third message from the CU for configuring bearer mapping for supporting downlink, DL, User Plane, UP, traffic of the remote UE; and
receiving a fourth message from the CU for configuring bearer mapping for supporting DL Control Plane, CP, traffic of the remote UE,
wherein the fourth message is transmitted via a UE-specific F1AP signaling associated with the remote UE, and wherein the fourth message comprises a mapping between an SRB of the remote UE and the Uu RLC channel of the relay UE, the Uu RLC channel being identified by a combination of an ID of the Uu RLC channel and an ID of the relay UE.

6. A method performed by a Central Unit, CU, of a wireless communication node in a wireless network, the method comprising:
transmitting a first F1 Application Protocol, F1AP, signaling to a Distributed Unit, DU, of the wireless communication node to configure a UE context for a relay UE the first F1AP signaling comprising a CU level relay ID identifying the relay UE in the CU, a DU level relay ID identifying the relay UE in the DU and an ID of the remote UE; and
receiving, from the DU, a first response message to the first F1AP signaling comprising a PC5 RLC channel configuration and a Uu RLC channel configuration.

7. The method of claim 6, wherein the first F1AP signaling comprises at least one of:
an ID of a remote UE;
a request for configuring a PC5 RLC channel between the relay UE and the remote UE; or
a request for configuring a Uu RLC channel between the relay UE and the wireless communication node.

8. The method of claim 7, wherein:
the request for configuring the PC5 RLC channel between the relay UE and the remote UE comprises a list of PC5 RLC channels to be configured,
each PC5 RLC channel in the list of PC5 RLC channels to be configured comprises at least one of: an ID of the PC5 RLC channel; a Quality of Service, QoS, profile of the PC5 RLC channel; a control plane traffic type; or an ID of the remote UE, and
wherein:
the list of PC5 RLC channels to be configured comprises at least one of: a list of PC5 RLC channels to be setup; a list of PC5 RLC channels to be modified; or a list of PC5 RLC channels to be released, or
the QoS profile of the PC5 RLC channel comprises: Packet Delay Budget, PDB, information, and wherein the PDB information is indicative of a packet delay budget between the relay UE and remote UE.

9. The method of claim 7, wherein the request for configuring the Uu RLC channel between the relay UE and the wireless communication node comprises a list of Uu RLC channels to be configured, and each Uu RLC channel in the list of Uu RLC channels to be configured comprises at least one of: an ID of the Uu RLC channel; a QoS profile of the Uu RLC channel; or a control plane traffic type,
wherein the QoS profile of the Uu RLC channel comprises Packet Delay Budget, PDB, information, and wherein the PDB information is indicative of the packet delay budget between the DU and the relay UE.

10. The method of claim 6, further comprising:
transmitting a second F1AP signaling to the DU to configure a UE context for a remote UE, wherein the remote UE is configured with an indirect path using the relay UE to the wireless communication node.

11. The method of claim 10, wherein:
the first F1 Application Protocol, F1AP, signaling triggers configuring a Uu RLC channel between the DU and the relay UE;
the second F1AP signaling triggers configuring PC5 RLC channel between the relay UE and the remote UE; and
the Uu RLC channel and the PC5 RLC channel are used to deliver traffic destined to the remote UE, and wherein the relay UE serves as a relay between the remote UE and the wireless communication node.

12. The method of claim 6, further comprising:
transmitting a fourth message to the DU to configure bearer mapping for supporting downlink, DL, User Plane, UP, traffic of the remote UE; and
transmitting a fifth message to the DU to configure bearer mapping for supporting downlink, DL, Control Plane, CP, traffic of the remote UE,
wherein the fifth message is transmitted via a UE-specific F1AP signaling associated with the remote UE, and wherein the fifth message comprises a mapping between an SRB of the remote UE and a Uu RLC channel of the relay UE, the Uu RLC channel being identified by a combination of an ID of the Uu RLC channel and an ID of the relay UE.

13. The method of claim 6, further comprising transmitting a sixth message to the DU, the sixth message comprising sidelink communication authorization information for at least one of: the relay UE, or the remote UE, wherein the sidelink communication authorization information comprises at least one of:
a 5G ProSe Layer-2 UE-to-Network Relay authorization for the relay UE; or
a Layer-3 UE-to-Network Relay authorization for the relay UE;
a 5G ProSe Layer-2 Remote UE authorization; or
a ProSe Direct Discovery authorization.

14. A Distributed Unit, DU, of a wireless communication node, the DU comprising a memory for storing computer instructions and a processor in communication with the memory, wherein, when the processor executes the computer instructions, the processor is configured to cause the DU to:
upon receiving a RRCSetupRequest message from a remote UE via a relay UE, transmit a first transferring message to a Central Unit, CU, of the wireless communication node, wherein the first transferring message is an INITIAL UL RRC MESSAGE TRANSFER message and comprises an ID of the remote UE and a DU level relay UE ID identifying the relay UE in the DU, and wherein the first transferring message enables the CU to associate the remote UE with the relay UE, and wherein the relay UE serves as a relay between the remote UE, which is connected to the relay UE via PC5 interface, and the wireless communication node.

15. A Central Unit, CU, that is interrelated with a Distributed Unit, DU, of a same wireless communication node, said CU comprising a memory for storing computer instructions and a processor in communication with the memory, wherein the processor, when executing the computer instructions, is configured to implement a method of any one of claims 6 to 13.

## Patentansprüche

1. Verfahren, das durch eine verteilte Einheit, DU, eines drahtlosen Kommunikationsknotens in einem drahtlosen Netzwerk ausgeführt wird, das Verfahren umfassend:
bei einem Empfangen einer RRCSetupRequest-Nachricht von einer entfernten UE über eine Relais-UE, Übertragen einer ersten transferierenden Nachricht an eine Zentraleinheit, CU, des drahtlosen Kommunikationsknotens, wobei die erste transferierende Nachricht eine INITIAL UL RRC MESSAGE TRANSFER-Nachricht ist und eine ID der entfernten UE und eine Relais-UE-ID auf DU-Level, die die Relais-UE in der DU identifiziert, umfasst und wobei die erste transferierende Nachricht der CU ermöglicht, die entfernte UE mit der Relais-UE zu verknüpfen, und wobei die Relais-UE als ein Relais zwischen der entfernten UE, die über eine PC5-Schnittstelle mit der Relais-UE verbunden ist, und dem drahtlosen Kommunikationsknoten dient.

2. Verfahren nach Anspruch 1, wobei die ID der entfernten UE umfasst: eine lokale UE-ID, die die entfernte UE in einem Rahmen der Relais-UE in dem drahtlosen Netzwerk identifiziert.

3. Verfahren nach Anspruch 1, wobei die Relais-UE-ID auf DU-Level eine gNB-DU-UE F1AP-ID der Relais-UE umfasst.

4. Verfahren nach Anspruch 1, ferner umfassend:
Empfangen einer ersten Nachricht von einer CU des drahtlosen Kommunikationsknotens zum Konfigurieren eines Uu-RLC-Kanals zwischen der DU und der Relais-UE; oder
Empfangen einer zweiten Nachricht von der CU zum Konfigurieren einer Konfiguration auf einer Relais-UE-Seite eines PC5-RLC-Kanals zwischen der Relais-UE und der entfernten UE,
wobei der Uu-RLC-Kanal oder der PC5-RLC-Kanal verwendet werden, um einen Verkehr, der für die entfernte UE bestimmt ist, zu übergeben, und wobei die Relais-UE als ein Relais zwischen der entfernten UE und dem drahtlosen Kommunikationsknoten dient.

5. Verfahren nach Anspruch 4, ferner umfassend:
Empfangen einer dritten Nachricht von der CU zum Konfigurieren einer Trägerzuordnung zum Unterstützen von Downlink-Verkehr, DL-Verkehr, auf Benutzerebene, UP, der entfernten UE; und
Empfangen einer vierten Nachricht von der CU zum Konfigurieren der Trägerzuordnung zum Unterstützen von DL-Verkehr auf Steuerebene, CP, der entfernten UE,
wobei die vierte Nachricht über eine UE-spezifische F1AP-Signalisierung, die mit der entfernten UE verknüpft ist, übertragen wird und wobei die vierte Nachricht eine Zuordnung zwischen einem SRB der entfernten UE und dem Uu-RLC-Kanal der Relais-UE umfasst, wobei der Uu-RLC-Kanal durch eine Kombination einer ID des Uu-RLC-Kanals und einer ID der Relais-UE identifiziert wird.

6. Verfahren, das durch eine Zentraleinheit, CU, eines drahtlosen Kommunikationsknotens in einem drahtlosen Netzwerk durchgeführt wird, das Verfahren umfassend:
Übertragen einer ersten F1-Anwendungsprotokoll-, F1AP-Signalisierung, an eine verteilte Einheit, DU, des drahtlosen Kommunikationsknotens, um einen UE-Kontext für eine Relais-UE zu konfigurieren, die erste F1AP-Signalisierung umfassend eine Relais-ID auf CU-Level, die die Relais-UE in der CU identifiziert, eine Relais-ID auf DU-Level, die die Relais-UE in der DU identifiziert, und eine ID der entfernten UE; und
Empfangen, von der DU, einer ersten Antwortnachricht auf die erste F1AP-Signalisierung, umfassend eine PC5-RLC-Kanalkonfiguration und eine Uu RLC-Kanalkonfiguration.

7. Verfahren nach Anspruch 6, wobei die erste F1AP-Signalisierung mindestens eine umfasst von:
einer ID einer entfernten UE;
einer Anforderung zum Konfigurieren eines PC5-RLC-Kanals zwischen der Relais-UE und der entfernten UE; oder
einer Anforderung zum Konfigurieren eines Uu-RLC-Kanals zwischen der Relais-UE und dem drahtlosen Kommunikationsknoten.

8. Verfahren nach Anspruch 7, wobei:
die Anforderung zum Konfigurieren des PC5-RLC-Kanals zwischen der Relais-UE und der entfernten UE eine Liste von zu konfigurierenden PC5-RLC-Kanälen umfasst,
jeder PC5-RLC-Kanal in der Liste von zu konfigurierenden PC5-RLC-Kanälen mindestens eines umfasst von: einer ID des PC5-RLC-Kanals; einem Dienstgüteprofil, QoS-Profil, des PC5-RLC-Kanals; einer Verkehrsart auf Steuerebene; oder einer ID der entfernten UE, und
wobei:
die Liste von zu konfigurierenden PC5-RLC-Kanälen mindestens eine umfasst von: einer Liste von einzurichtenden PC5-RLC-Kanälen; einer Liste von zu ändernden PC5-RLC-Kanälen; oder einer Liste von freizugebenden PC5-RLC-Kanälen, oder
das QoS-Profil des PC5-RLC-Kanals umfasst: Paketverzögerungsbudgetinformationen, PDB-Informationen, und wobei die PDB-Informationen ein Paketverzögerungsbudget zwischen der Relais-UE und der entfernten UE angeben.

9. Verfahren nach Anspruch 7, wobei die Anforderung zum Konfigurieren des Uu-RLC-Kanals zwischen der Relais-UE und dem drahtlosen Kommunikationsknoten eine Liste von zu konfigurierenden Uu-RLC-Kanälen umfasst und jeder Uu-RLC-Kanal in der Liste von zu konfigurierenden Uu-RLC-Kanälen mindestens eines umfasst von: einer ID des Uu-RLC-Kanals; einem QoS-Profil des Uu-RLC-Kanals; oder einer Verkehrsart auf Steuerebene,
wobei das QoS-Profil des Uu-RLC-Kanals Paketverzögerungsbudgetinformationen, PDB-Informationen, umfasst und wobei die PDB-Informationen das Paketverzögerungsbudget zwischen der DU und der Relais-UE angeben.

10. Verfahren nach Anspruch 6, ferner umfassend:
Übertragen einer zweiten F1AP-Signalisierung an die DU, um einen UE-Kontext für eine entfernte UE zu konfigurieren, wobei die entfernte UE mit einem indirekten Pfad unter Verwendung der Relais-UE zu dem drahtlosen Kommunikationsknoten konfiguriert ist.

11. Verfahren nach Anspruch 10, wobei:
die erste F1-Anwendungsprotokollsignalisierung, F1AP-Signalisierung, das Konfigurieren eines Uu-RLC-Kanals zwischen der DU und der Relais-UE auslöst;
die zweite F1AP-Signalisierung das Konfigurieren des PC5-RLC-Kanals zwischen der Relais-UE und der entfernten UE auslöst; und
der Uu-RLC-Kanal und der PC5-RLC-Kanal verwendet werden, um den Verkehr, der für die entfernte UE bestimmt ist, zu übergeben, und wobei die Relais-UE als ein Relais zwischen der entfernten UE und dem drahtlosen Kommunikationsknoten dient.

12. Verfahren nach Anspruch 6, ferner umfassend:
Übertragen einer vierten Nachricht an die DU, um die Trägerzuordnung zum Unterstützen von Downlink-Verkehr, DL-Verkehr, auf Benutzerebene, UP, der entfernten UE zu konfigurieren; und
Übertragen einer fünften Nachricht an die DU, um die Trägerzuordnung zum Unterstützen von Downlink-Verkehr, DL-Verkehr, auf Benutzerebene, UP, der entfernten UE zu konfigurieren,
wobei die fünfte Nachricht über eine UE-spezifische F1AP-Signalisierung, die mit der entfernten UE verknüpft ist, übertragen wird und wobei die fünfte Nachricht eine Zuordnung zwischen einem SRB der entfernten UE und einem Uu-RLC-Kanal der Relais-UE umfasst, wobei der Uu-RLC-Kanal durch eine Kombination einer ID des Uu-RLC-Kanals und einer ID der Relais-UE identifiziert wird.

13. Verfahren nach Anspruch 6, ferner umfassend das Übertragen einer sechsten Nachricht an die DU, die sechste Nachricht umfassend Sidelink-Kommunikationsautorisierungsinformationen für mindestens eine von: der Relais-UE oder der entfernten UE, wobei die Sidelink-Kommunikationsautorisierungsinformationen mindestens eine umfassen von:
einer 5G-ProSe-Layer-2-UE-zu-Netzwerkrelaisautorisierung für die Relais-UE; oder
einer Layer-3-UE-zu-Netzwerkrelaisautorisierung für die Relais-UE;
einer 5G-ProSe-Layer-2-Autorisierung für die entfernte UE; oder
einer ProSe-Direct-Discovery-Autorisierung.

14. Verteilte Einheit, DU, eines drahtlosen Kommunikationsknotens, die DU umfassend einen Speicher zum Speichern von Computeranweisungen und einen Prozessor in Kommunikation mit dem Speicher, wobei, wenn der Prozessor die Computeranweisungen ausführt, der Prozessor konfiguriert ist, um die DU zu veranlassen zum:
bei dem Empfangen einer RRCSetupRequest-Nachricht von einer entfernten UE über eine Relais-UE, Übertragen einer ersten transferierenden Nachricht an eine Zentraleinheit, CU, des drahtlosen Kommunikationsknotens, wobei die erste transferierende Nachricht eine INITIAL UL RRC MESSAGE TRANSFER-Nachricht ist und eine ID der entfernten UE und eine Relais-UE-ID auf DU-Level, die die Relais-UE in der DU identifiziert, umfasst und wobei die erste transferierende Nachricht der CU ermöglicht, die entfernte UE mit der Relais-UE zu verknüpfen, und wobei die Relais-UE als ein Relais zwischen der entfernten UE, die über die PC5-Schnittstelle mit der Relais-UE verbunden ist, und dem drahtlosen Kommunikationsknoten dient.

15. Zentraleinheit, CU, die mit einer verteilten Einheit, DU, eines gleichen drahtlosen Kommunikationsknotens zusammenhängt, die CU umfassend einen Speicher zum Speichern von Computeranweisungen und einen Prozessor in Kommunikation mit dem Speicher, wobei der Prozessor, wenn er die Computeranweisungen ausführt, konfiguriert ist, um ein Verfahren nach einem der Ansprüche 6 bis 13 zu implementieren.

## Revendications

1. Procédé effectué par une unité distribuée, DU, d'un nœud de communication sans fil dans un réseau sans fil, le procédé comprenant :
lors de la réception d'un message RRCSetupRequest provenant d'un UE distant par l'intermédiaire d'un UE relais, la transmission d'un premier message de transfert à une unité centrale, CU, du nœud de communication sans fil, dans lequel le premier message de transfert est un message INITIAL UL RRC MESSAGE TRANSFER et comprend un ID de l'UE distant et un ID de l'UE relais au niveau de la DU identifiant l'UE relais dans la DU, dans lequel le premier message de transfert permet à la CU d'associer l'UE distant à l'UE relais, et dans lequel l'UE relais sert de relais entre l'UE distant, qui est connecté à l'UE relais par l'intermédiaire d'une interface PC5, et du nœud de communication sans fil.

2. Procédé selon la revendication 1, dans lequel l'ID de l'UE distant comprend : un ID d'UE local identifiant l'UE distant dans une portée de l'UE relais dans le réseau sans fil.

3. Procédé selon la revendication 1, dans lequel l'ID de l'UE relais au niveau de la DU comprend un ID gNB-DU UE F1AP de l'UE relais.

4. Procédé selon la revendication 1, comprenant en outre :
la réception d'un premier message provenant d'une CU du nœud de communication sans fil pour configurer un canal Uu RLC entre la DU et l'UE relais ; ou
la réception d'un deuxième message provenant de la CU pour configurer une configuration côté UE relais d'un canal PC5 RLC entre l'UE relais et l'UE distant,
dans lequel le canal Uu RLC ou le canal PC5 RLC sont utilisés pour acheminer un trafic destiné à l'UE distant, et dans lequel l'UE relais sert de relais entre l'UE distant et le nœud de communication sans fil.

5. Procédé selon la revendication 4, comprenant en outre :
la réception d'un troisième message provenant de la CU pour configurer un mappage de porteuses afin de prendre en charge un trafic de plan utilisateur, UP, de liaison descendante, DL, de l'UE distant ; et
la réception d'un quatrième message provenant de la CU pour configurer un mappage de porteuses afin de prendre en charge un trafic de plan de commande, CP, DL de l'UE distant,
dans lequel le quatrième message est transmis par l'intermédiaire d'une signalisation F1AP spécifique à l'UE associée à l'UE distant, et dans lequel le quatrième message comprend un mappage entre un SRB de l'UE distant et le canal Uu RLC de l'UE relais, le canal Uu RLC étant identifié par une combinaison d'un ID du canal Uu RLC et d'un ID de l'UE relais.

6. Procédé effectué par une unité centrale, CU, d'un nœud de communication sans fil dans un réseau sans fil, le procédé comprenant :
la transmission d'une première signalisation de protocole d'application F1, F1AP, à une unité distribuée, DU, du nœud de communication sans fil pour configurer un contexte UE pour un UE relais, la première signalisation F1AP comprenant un ID de relais au niveau de la CU identifiant l'UE relais dans la CU, un ID de relais au niveau de la DU identifiant l'UE relais dans la DU et un ID de l'UE distant ; et
la réception, provenant de la DU, d'un premier message de réponse à la première signalisation F1AP comprenant une configuration de canal PC5 RLC et une configuration de canal Uu RLC.

7. Procédé selon la revendication 6, dans lequel la première signalisation F1AP comprend au moins l'un parmi :
un ID d'un UE distant ;
une demande de configuration d'un canal PC5 RLC entre l'UE relais et l'UE distant ; ou
une demande de configuration d'un canal Uu RLC entre l'UE relais et le nœud de communication sans fil.

8. Procédé selon la revendication 7, dans lequel :
la demande de configuration du canal PC5 RLC entre l'UE relais et l'UE distant comprend une liste de canaux PC5 RLC à configurer,
chaque canal PC5 RLC de la liste de canaux PC5 RLC à configurer comprend au moins l'un parmi : un ID du canal PC5 RLC ; un profil de qualité de service, QoS, du canal PC5 RLC ; un type de trafic de plan de commande ; ou un ID de l'UE distant, et
dans lequel :
la liste de canaux PC5 RLC à configurer comprend au moins l'une parmi : une liste de canaux PC5 RLC à configurer ; une liste de canaux PC5 RLC à modifier ; ou une liste de canaux PC5 RLC à libérer, ou
le profil QoS du canal PC5 RLC comprend : des informations de budget de retard de paquets, PDB et dans lequel les informations PDB indiquent un budget de retard de paquets entre l'UE relais et l'UE distant.

9. Procédé selon la revendication 7, dans lequel la demande de configuration du canal Uu RLC entre l'UE relais et le nœud de communication sans fil comprend une liste de canaux RLC Uu à configurer, et chaque canal Uu RLC dans la liste de canaux Uu RLC à configurer comprend au moins l'un parmi : un ID du canal Uu RLC ; un profil QoS du canal Uu RLC ; ou un type de trafic de plan de commande,
dans lequel le profil QoS du canal RLC Uu comprend des informations de budget de retard de paquets, PDB, et dans lequel les informations PDB indiquent budget de retard de paquets entre la DU et l'UE relais.

10. Procédé selon la revendication 6, comprenant en outre :
la transmission d'une seconde signalisation F1AP à la DU pour configurer un contexte UE pour un UE distant, dans lequel l'UE distant est configuré avec un chemin indirect à l'aide de l'UE relais vers le nœud de communication sans fil.

11. Procédé selon la revendication 10, dans lequel :
la première signalisation de protocole d'application F1, F1AP, déclenche la configuration d'un canal Uu RLC entre la DU et l'UE relais ;
la seconde signalisation F1AP déclenche la configuration d'un canal PC5 RLC entre l'UE relais et l'UE distant ; et
le canal Uu RLC et le canal PC5 RLC sont utilisés pour acheminer un trafic destiné à l'UE distant, et dans lequel l'UE relais sert de relais entre l'UE distant et le nœud de communication sans fil.

12. Procédé selon la revendication 6, comprenant en outre :
la transmission d'un quatrième message à la DU pour configurer un mappage de porteuses afin de prendre en charge un un trafic de plan utilisateur, UP, de liaison descendante, DL, de l'UE distant ; et
la transmission d'un cinquième message à la DU pour configurer un mappage de porteuses afin de prendre en charge un trafic de plan de commande, CP de liaison descendante, DL, de l'UE distant,
dans lequel le cinquième message est transmis par l'intermédiaire d'une signalisation F1AP spécifique à l'UE associée à l'UE distant, et dans lequel le cinquième message comprend un mappage entre un SRB de l'UE distant et un canal Uu RLC de l'UE relais, le canal Uu RLC étant identifié par une combinaison d'un ID du canal Uu RLC et d'un ID de l'UE relais.

13. Procédé selon la revendication 6, comprenant en outre la transmission d'un sixième message à la DU, le sixième message comprenant des informations d'autorisation de communication de liaison latérale pour au moins l'un parmi : l'UE relais ou l'UE distant, dans lequel les informations d'autorisation de communication de liaison latérale comprennent au moins l'une parmi :
une autorisation de relais UE-vers-réseau 5G ProSe de couche 2 pour l'UE relais ; ou
une autorisation de relais UE-vers-réseau de couche 3 pour l'UE relais ;
une autorisation 5G ProSe de couche 2 pour l'UE distant ; ou
une autorisation de découverte directe ProSe.

14. Unité distribuée, DU, d'un nœud de communication sans fil, la DU comprenant une mémoire pour stocker des instructions informatiques et un processeur en communication avec la mémoire, dans laquelle, lorsque le processeur exécute les instructions informatiques, le processeur est configuré pour amener la DU à :
lors de la réception d'un message RRCSetupRequest provenant d'un UE distant par l'intermédiaire d'un UE relais, transmettre un premier message de transfert à une unité centrale, CU, du nœud de communication sans fil, dans laquelle le premier message de transfert est un message INITIAL UL RRC MESSAGE TRANSFER et comprend un ID de l'UE distant et un ID de l'UE relais au niveau de la DU identifiant l'UE relais dans la DU, et dans laquelle le premier message de transfert permet à la CU d'associer l'UE distant à l'UE relais, et dans laquelle l'UE relais sert de relais entre l'UE distant, qui est connecté à l'UE relais par l'intermédiaire d'une interface PC5, et du nœud de communication sans fil.

15. Unité centrale, CU, qui est en relation avec une unité distribuée, DU, d'un même nœud de communication sans fil, ladite CU comprenant une mémoire pour stocker des instructions informatiques et un processeur en communication avec la mémoire, dans laquelle le processeur, lorsqu'il exécute les instructions informatiques, est configuré pour mettre en œuvre un procédé selon l'une quelconque des revendications 6 à 13.
